Europäisches Patentamt

European Patent Office

Office européen des brevets

(19)

(11) EP 1 710 968 A1

(12) EUROPEAN PATENT APPLICATION

(43) Date of publication:
11.10.2006 Bulletin 2006/41

(51) Int Cl.:
H04L 29/06 (2006.01)    H04Q 7/32 (2006.01)

(21) Application number: 05007418.6

(22) Date of filing: 05.04.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(71) Applicant: SIEMENS AKTIENGESELLSCHAFT
80333 München (DE)

(72) Inventors:
• Schulz, Egon, Dr.
  80993 München (DE)
• Zirwas, Wolfgang
  82194 Gröbenzell (DE)

(54) **Method, network element and telecommunications system for generating security keys for radio channels using channel side information estimation**

(57)     The invention consists of a method, network element and network arranged to generate a key usable, in a telecommunications network 1000, for:
i) encrypting data that is to be transmitted over a channel and/or
ii) for decrypting data received over a channel, said channel separating two network elements 10, 100 in said telecommunications network 1000 wherein said key is generated in response to at least one estimated property of said channel.

FIG 3

C = path of the channel between network elements 500, 600

**Description**

**Field of the invention**

The invention is used in telecommunications networks to ensure that transmitted data is secure and protected against attacks.

**Summary of the invention**

Increasingly, security within telecommunications networks such as mobile communications networks and wireless radio networks is becoming a major issue with regards to the ability of such systems to provide the necessary guarantee to the public, in order for the public to become convinced of the security of such systems. If the public can not be provided with guarantees that they can rely on the security measures provided within such systems, then introduction of a multitude of applications like wireless payment over the Internet will be hampered.

Additionally, Software Defined Radio (SDR) concepts whereby mobile users can request and then download software applications to their mobile stations (MN), require high levels of security in order to ensure that the downloaded software applications and the data that they contain have not been manipulated or eavesdropped in any way by third parties such as hackers or malicious users.

One such type of manipulation of downloaded data, which is given by way of illustration, is that of the so called "Man-in-the-middle attack" (MITM) or as it is alternatively known "Transport Control Protocol (TCP) Hijacking".
This type of attack is known from 1994 and consists of a malicious user getting between a sender and a receiver, intercepting and accessing the transferred data, modifying it and then forwarding it to the recipient in such a way that the receiver is not aware of any change,
(http://www.wordspy.com/words/maninthemiddleattack.asp).

Within the field of computer networks, such types are well known and well documented. However with the advent of Wireless Local Area Networks (WLANs) and the development of 3rd Generation (3G) mobile technologies and beyond, whereby for example mobile users can access the Internet from their mobile station (MN), the issue of security against such attacks is very important.

In "An Initial Security Analysis of the IEEE 802.1X Standard" by Arbaugh et al, Tech. Rep. CS-TR-4328, University of Maryland, College Park, 6th February 2002, the authors outline a number of scenarios that uncover serious weaknesses in the Wireless Fidelity (Wi-Fi) security protocol also known as 802.1X, used in WLANs. The weaknesses uncovered allow for such attacks as explained above taking place, thus reducing the security of the transmission.

In "A Man-in-the-Middle Attack on UMTS" by Meyer et al., WiSe'04, October 1, 2004, Philadelphia, USA, pp. 90 - 97, the authors outline a man-in-the-middle (MITM) attack on the Universal Mobile Telecommunication Standard (UMTS), which is a 3G mobile technology, wherein an intruder can impersonate a valid GSM (Global System for Mobile Communications) base station to a UMTS user regardless of the fact that UMTS authentication and key agreement are used, resulting in the intruder eavesdropping on all mobile station initiated traffic. For network authentication, the UMTS standard depends on both the validity of the authentication token and the integrity protection of the subsequent security command.

However GSM base stations do not support integrity protection. This leads to all mobile stations (MNs) that simultaneously support the GSM and Universal Terrestrial Radio Access Network (UTRAN) air interface, being prone to this type of attack.

One way to overcome the problem and increase security is to use keys between the sender and the receiver. The well known Internet Protocol Security (IPsec) protocols use a public key that is shared between the sending and receiving devices.

In EP 1458163, a method is disclosed for protecting a mobile node from the threat posed by MITM attacks. According to this method, a mobile node will transmit a "Home Test Init" packet to a home agent such as a router and a "Care of Test Init" packet to a corresponding node such as a base station or another mobile unit. The home agent will in turn generate a first key and transmit it to the corresponding node. In turn the corresponding node will generate a second key and transmit it to the home agent in a "Home of Test" packet, as well as generating a "Care of Test" packet encrypted using a secret key generated from the first key information and then transmitting it to the mobile node. The home agent in turn will generate a security key based on the received "Home of Test" packet and transmit it to the mobile node, which uses it in turn to decode the received "Care of Test" packet.

However, the use of keys does not allow a receiver to detect in any way whether the received data has been manipulated by in some way at some intermediate station between the sender and itself. If a hacker or anybody intent on breaking into a communication succeeds in breaking the security keys, a receiver will still receive data that appears to be authentic but in fact is not.

Another way to overcome the problem is to use quantisation effects in order to secure the transmission.

In US 2004/0161109 to Trifonov, a single-photon detector is disclosed for use in a two-way quantum key distribution optical system. The detector can detect weak substitute signals associated with MITM attacks, by counting the number of weak pulses that enter/leave a reflecting station. A malicious user upon adding weak pulses to the quantum channel in order to gain phase information is detected as this changes the number of pulses already counted.

However, the use of devices using quantisation effects is costly and a huge investment in necessary in order to replace existing network infrastructure. Additionally, it can not be used in a wireless or mobile radio environment as it is not possible to secure the air interface using this technology.

A need therefore exists for a technique that can increase the security of a transmission between a sender and a receiver in a wireless or mobile radio environment and allow for a receiver to be able to detect whether the received data has been manipulated in any way.

With the present invention the above mentioned problems are resolved. The proposed technique increases the security of the transmission between a sender and a receiver in a wireless or mobile radio environment and can be implemented in all existing wireless or mobile networks without incurring increased extra costs. Advantageously, the technique also allows a receiver to detect when received data has been manipulated by an outside source. A further advantage is that the proposed technique can be implemented on all devices that act as receivers or senders in such networks.

The technique is achieved by the teachings contained in the independent claims.

Said independent method claim, generates a key usable, in a telecommunications network for:

i) encrypting data that is to be transmitted over a channel and/or

ii) for decrypting data received over a channel, said channel separating two network elements in said telecommunications network, wherein said key is generated in response to at least one estimated property of said channel.

Said independent network element claim comprises of means arranged to generate a key usable for:

i) encrypting data that is to be transmitted over a channel and/or

ii) decrypting data received over a channel, said channel separating said network element from a second network element, in said telecommunications network, wherein said means are further adapted to generate said key in response to at least one estimated property of said channel.

Said independent telecommunications network claim comprises at least two network elements according to the independent network element claim.

The combination of the features in the independent claims increases the security of a transmission between a sender and a receiver in a wireless or mobile radio environment and allows for a receiver to detect whether the received data has been manipulated in any way.

Further advantages can be seen in the dependent claims whereby said channel property corresponds to at least one channel impulse response of said channel, and whereby the estimation of the channel properties is performed constantly or upon reception of a notification message, and whereby the notification message is transmitted with a pre-distortion.

**Short description of the drawings**

The present invention will become more fully apparent from the detailed description given hereinbelow and the accompanying drawings which are given by way of illustration only, and thus are not limitative of the present invention, and wherein:

Fig. 1,    shows how a MITM attack occurs in a radio environment.

Fig. 2,    shows how the proposed invention is implemented.

Fig. 3,    illustrates a network element in which the proposed invention can be implemented.

**Detailed description of the invention**

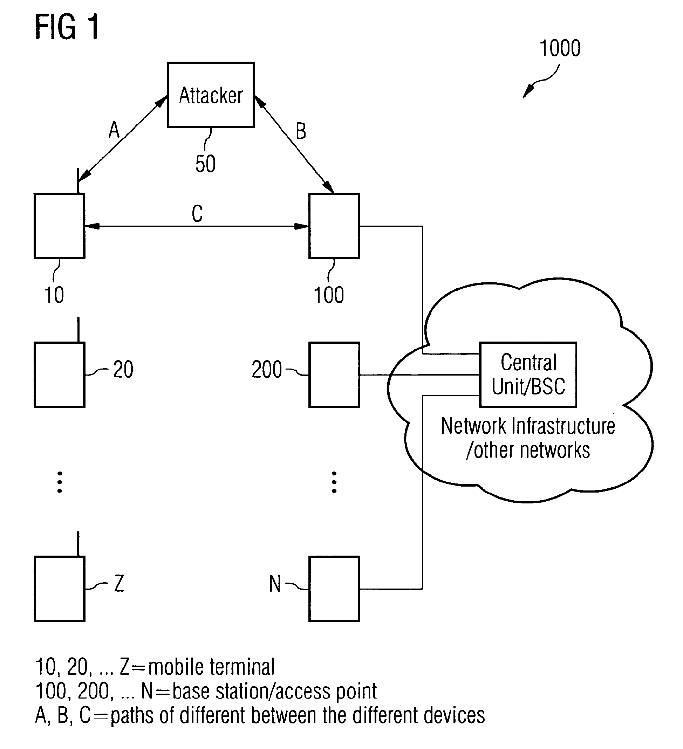

Fig. 1, shows a mobile radio network 1000 wherein it is possible for a malicious user or attacker 50 to insert himself between network elements (). These network elements can be a mobile terminal 10 and a base station or access point 100. It is understood in the art that network elements can comprise a number of other devices used in a telecommunications network, such as personal computers, laptops etc.

Via the insertion the attacker 50 pretends being the base station or access point 100 to the mobile terminal 10 and in the opposite direction, the mobile terminal 10 towards the base station or access point 100. Such a radio system comprises of a plurality of base stations/access points 100, 200,..N that connect a plurality of mobile terminals 10, 20,...Z to a fixed network infrastructure or to other radio networks.

The way in which an attacker can do this is by the attacker 50 initiating an authentication procedure prior to the attack to the mobile terminal 10. The mobile terminal 10 will respond to this procedure by transmitting its mobile identity and security capabilities back. As mobile terminals connect to a base station/access point that provides the best reception, it is easy for an attacker to ensure this occurs by transmitting at a higher power than base stations/access points located in the vicinity. The attacker then will use the information gathered from the mobile terminal to authenticate itself as the mobile terminal to a network, by transmitting the gathered information to a base station/access point. In this way, all traffic will pass via the attacker on its way to and from the mobile terminal to the network via paths A and B, instead of path C. Since both sides (mobile terminal and network) are under the impression that the authentication is correct, there is no possibility for any recognition that an attack has taken place and that the data being received might be manipulated. This can be especially dangerous when mobile terminals wish to download applications from the network and execute them locally on the terminal. The above configuration, is also applicable in a WLAN environment, whereby instead of a mobile terminal 10 and a base station or access point 100, a computer device such as a personal computer (PC), or a notepad or a laptop which have a wireless connection to the network, is used.

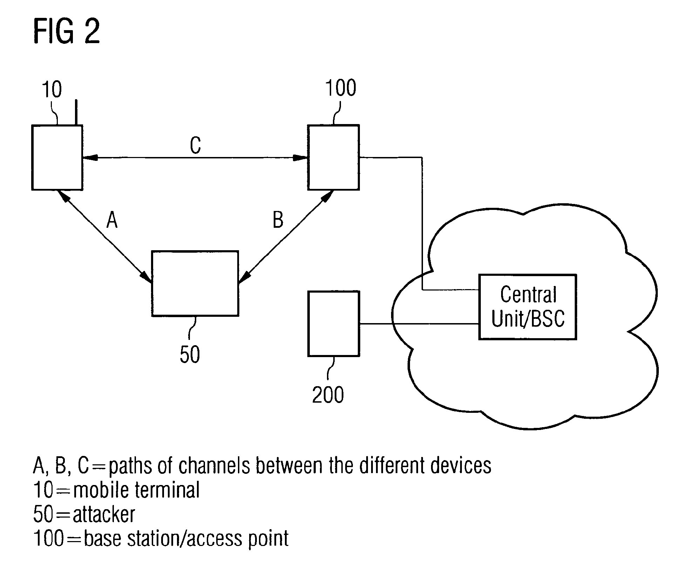

In fig. 2, the proposed invention is further explained in an illustrative embodiment. When transmitting messages between a mobile terminal 10 and a base station/access point 100, security in the form of encryption is applied to the data being transmitted. Nevertheless, as described in the above paragraph, an attacker 50 can insert itself between the mobile terminal 10 and the base station 100 and undetected modify the contents of the data being transmitted.

In order to ensure security, the invention takes into account the fact that the channel characteristic due to multipath propagation is unique between a sender and a receiver that transmit to each other, as the radio channels between the two are location dependent. Therefore, in a time division duplex (TDD) systems, it is possible for both sides (sender and receiver) to estimate the channel impulse response which due to reciprocity will be identical for the radio channels.

As it can be seen from fig. 2, a sender or a receiver is not specifically limited to a mobile terminal 10 and a base station or access point 100 respectively. In a two way communication between two parties, both parties are simultaneously sender and receiver, depending on the channel being used. For ease of illustration and understanding of the invention, but without having any limitative effect, a base station or access point 100 is a sender and a mobile terminal 10 a receiver.

Based on the estimated channel response a further security key on top of any security key that is used to encrypt data, is generated at both sides and used to encrypt the data to be transmitted on Layer 1 (Physical Layer). The data to be encrypted can be a partial set of data being transmitted, or the complete set of data being transmitted.

In the first case for example only the user data is encrypted while in the second case the user data and any other data being transmitted such as the Media Access Control MAC data, the Data Link Control DLC data are encrypted.

An attacker 50 that is intent on attacking will have completely different channel characteristics for the channels between it and the other two stations, as paths A, B are not the same as path C, each have different channel characteristics. Attackers at other locations, have no possibility to estimate the channel characteristic of the channel they are trying to attack, as the superposition of multipath components will lead to different radio channels existing between them and the ones under attack. In this way, a receiver 10 will be able to detect whether the received data has been manipulated by an attacker 50 or it is received data from a genuine sender 100, because the received data when verified with the security key will result in a result that indicates that it was encrypted using the same channel response or not.

When transmission between the sender 100 and the receiver 10 is initiated an explicit identification of the two sides taking part is required. Digital certificates or Subscriber Identity Module SIM numbers are exchanged in order to authenticate the participants. This authentication is time consuming and only needs to be performed once at the beginning. For all further transmissions, the security key generated according to the inventive technique, is used to encrypt the transmitted data.

The security key is constantly generated and changes continuously according to the time variance of the radio channel. Thus both sender 100 / receiver 10 taking part in the transmission continuously monitor their respective radio channels, in order to maintain a secure transmission. This is particularly advantageous when at least one of the two is a mobile terminal 10, whereby the channel characteristics change continuously over time due to the mobility of a user using the mobile terminal 10. As stated previously, the same technique can be applied when one of the sender/receiver is a fixed computer with a wireless connection.

In the case of the application of link adaptation techniques to the radio channel, which can occur often, channel estimation has to be performed so that the transmission is not lost. A slow continuous variation in the channel characteristics and in particular of the channel impulse response, guarantees that the same sender 100 / receiver 10 are connected with each other.

In the case of a jump in the channel impulse response, a renewed authentication is necessary. In this case, each side performs the channel estimation When at least one of the two sides taking part in the transmission, is a mobile terminal 10 and is about to move from one cell to another and a handover operation is necessary, then a Joint Transmission/Detection procedure is launched by a central unit 700, for example a Base Station Controller BSC, that jointly handles a number of base stations BSSs. The base stations that are adjacent to the base station currently communicating to the mobile terminal 10, will also measure the channel characteristics Otherwise, once the mobile terminal has moved into the new cell and the handover operation is completed, a new authentication, as described above, is performed.

The data to be transmitted is encrypted with this generated security key alone or as additional encrypting on top of a pre-arranged encrypting scheme. When receiving data, a receiver 10 will apply the security key in order to decrypt and verify whether the received data has been manipulated or not. Data that has been transmitted from an attacker 50 will lead to a completely different channel impulse response being generated at the receiver 10 when the security key is applied. Thus the receiver 10 will be able to detect that the received data has been manipulated and therefore no further decoding will be performed and the data will not be processed any further within the system of the receiver 10. In effect the received data at this point will be dropped. Thus the receiver's system is protected against attacks. In the event of data being verified as having been manipulated, the receiver 10 will drop the received data and request the sender 100 to retransmit the data.

As there is no communication of this generated security key between the two sides, channel estimation has to be performed over a large number of received data frames, in order to ensure that the generated key reflects the channel characteristics. The channel estimation, is performed when a receiver 10 receives a frame and in particular when it receives the preamble part of the frame. Preambles are located around the middle of a transmitted frame and the frame length is adapted to the time variance of the channel. Using preambles as trigger points to perform the channel estimation is highly advantageous, as it allows for good measurements to be performed. Additionally, tracking algorithms can be deployed in order to track the channel characteristics. This enables time varying channels to be also tracked with the same frequency of preambles. For the channel estimation, special well known preambles are used which are known at both the receiver 10 and sender 100 sides and are transmitted before the user data.

As noise in the channel can affect the received signal and therefore cause the channel estimation to be inaccurate, a strong Forward Error Correction FEC with a low coding rate is used to transmit data. Therefore, channel estimation is done over a high number of frames, i.e. over many symbols, so that the accuracy is higher. Additionally, some further symbols can be pre-distorted at the transmitter side in order to provide redundancy according to the code used. In the simplest case a repetition code can be used.

In order for each side to be able to generate clearly distinguishable channel estimates and thus facilitate the generation of the security key, the transmit sides introduce a suitable pre-distortion to transmitted signal. This is especially useful in Orthogonal Frequency Division Multiplex OFDM systems, so that each sub-carrier SC will carry one or several bits of the security key code which is represented directly in the received I (phase) and Q (amplitude) values of each SC.

As for the length of the security key, it is known that for indoor, outdoor below rooftop environments 6 to 8 eigenvalues typically exist. For this eight transmit and receive antennas can be used. For example in a 100MHz system there can be about 8 single indoor paths. For this reason the diversity, i.e. possible key lengths, can be derived from the following formula:

```
Key length = (Number of transmit antennas)*(Number of receive
antennas)*(I+Q)*(Number of paths)
```

In our example this would lead to: 8*8*2*8 = 1024 possible key lengths. However this depends on the particular environment and can be shorter.

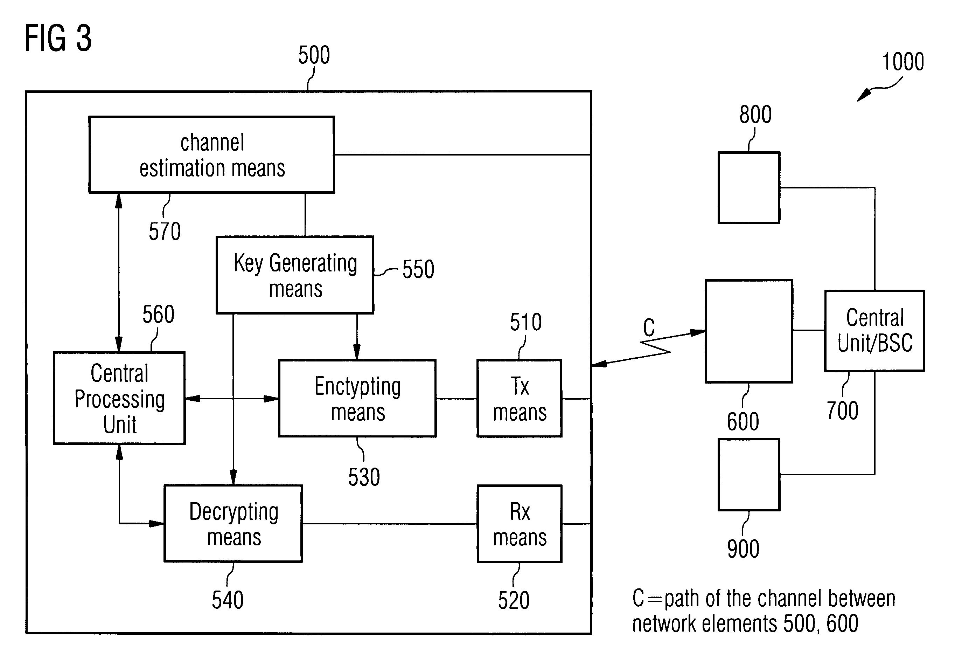

Fig. 3, illustrates a network element 500, such as a mobile terminal, a base station, an access point, a computing device or the like, in which the proposed invention can be implemented.

The network element 500 is located in a telecommunications network 1000, which can be a mobile or a wireless network, and is separated from a second network element 600, by a radio channel along path C. Said second network element 600 is connected to a central unit 700, which in the case of a mobile network can be a BSC or the like. Said central unit 700 can be further connected to other network elements 800, 900. Naturally, a person skilled in the art, will understand that such a telecommunications network comprises of numerous network elements beyond the ones illustrated in fig. 3.

Network element 500, comprises of transmit 510 and receive 520 means, arranged to transmit and receive data. It further comprises encrypting 530 and decrypting 540 means couple respectively to said transmit 510 and receive 520 means. Network element 500 also comprises key generating means 550 that are coupled to said encrypting 530 and decrypting 540 means. The key generating means 550 are further coupled to a central processing unit 560, which controls the network element 500. The central processing unit 560 is in turn coupled to a channel estimation means 570. Said channel estimation means 570 monitors the radio channel that lies along path C that separate network elements 500, 600 and in particular will monitor the channel properties that allow for a channel impulse response to be estimated. Said estimation means 570, are further adapted to estimate the channel properties constantly or upon reception of a notification message from network element 600. The estimation 570 means are further adapted to recognise that the received notification message has been transmitted with a pre-distortion and that a known preamble is contained in the received notification message, which itself is received in a frame. Upon receiving and recognising a notification message with said known preamble, said means 570 are further adapted to initiate the estimation of the channel impulse response. The estimation of the channel impulse response is performed over a large number of frames.

Once the estimation has been performed, the key generating means 550 will generate a key that is used by the encrypting 530 and decrypting 540 means to respectively encrypt and decrypt on a Physical Layer (Layer 1) data that is transmitted from or received in the form of frames at the network element 500, by the transmit 510 and receive 520 means.

Said encrypting 530 means are further adapted to apply an additional coding scheme on the transmitted frame, and also adapted to apply a strong FEC with a low coding rate. Similarly, decrypting 540 means are also further adapted to decode said additional coding scheme and remove any applied strong FEC with a low coding rate.

Although the invention has been described in terms of a preferred embodiment described herein, those skilled in the art will appreciate other embodiments and modifications which can be made without departing from the scope of the teachings of the invention. All such modifications are intended to be included within the scope of the claims appended hereto.

**Claims**

1.  A method for generating a key usable, in a telecommunications network (1000) for:

    i) encrypting data that is to be transmitted over a channel and/or
    ii) for decrypting data received over a channel, said channel separating two network elements (10, 100) in said telecommunications network (1000), wherein said key is generated in response to at least one estimated property of said channel.

2.  A method according to claim 1, whereby said networks elements (10, 100) are separated by two or more channel hops.

3.  A method according to claim 2, whereby said key is generated in response to said at least one estimated property for each individual channel hop or for an estimated aggregate channel property for all channel hops.

4.  A method according to any one of the previous claims, whereby said channel is a radio channel.

5.  A method according to any one of the previous claims, whereby said at least one estimated property corresponds to at least one channel impulse response of said channel.

6.  A method according to any one of the previous claims, whereby said estimation of said channel properties is performed constantly or upon reception of a notification message.

7.  A method according to claim 6, whereby said received notification message is transmitted with a pre-distortion.

8.  A method according to claim 7, whereby said notification message comprises of a known preamble that initiates said estimation.

9.  A method according to any one of the previous claims, whereby said encrypted data is transmitted in a frame.

10. A method according to claim 9, whereby an additional coding scheme is applied on said transmitted frame.

11. A method according to claim 10, whereby said additional coding scheme is a Forward Error Correction scheme.

12. A method according to claim 11, whereby said Forward Error Correction scheme has a low coding rate.

13. A method according to any one of the previous claims, whereby said estimation is performed over a large number of frames.

14. A method according to any one of the previous claims, whereby encrypting and/or decrypting said data is performed on a Physical Layer.

15. A network element (500) in a telecommunications network (1000) comprising means (550) arranged to generate a key usable for:

> i) encrypting data that is to be transmitted over a channel and/or
> ii) decrypting data received over a channel, said channel separating said network element (500) from a second network element (600), in said telecommunications network, wherein said means (550) are further adapted to generate said key in response to at least one estimated property of said channel.

16. A network element (500) according to claim 15, whereby the said channel comprises two or more channel hops between said network element (500) and said second network element (600), said means (550) are further adapted to generate said key in response to said at least one estimated channel property for each individual channel hop or for an estimated aggregate channel property for all channel hops.

17. A network element (500) according to any one of the previous claims 15 to 16, whereby said channel is a radio channel.

18. A network element (500) according to any one of the previous claims 15 to 17, further comprises means (570) adapted to estimate said at least one channel property by estimating at least one channel impulse response of said channel.

19. A network element (500) according to claim 18, whereby said means (570) are further adapted to estimate said channel properties constantly or upon reception of a notification message.

20. A network element (500) according to claim 19, whereby said means (570) are further adapted to recognise that said received notification message is transmitted with a pre-distortion.

21. A network element (500) according to claim 20, whereby said means (570) are further adapted to recognise a known preamble in said notification message and upon recognition of said preamble said means (570) are further adapted to initiate said estimation.

22. A network element (500) according to any one of the previous claims 15 to 21 whereby said encrypted data is transmitted in a frame.

23. A network element (500) according to claim 22, whereby said means (530) are further adapted to apply an additional coding scheme on said transmitted frame.

24. A network element (500) according to claim 23, whereby said means (530) are further adapted to apply a Forward Error Correction scheme as said additional coding.

25. A network element (500) according to claim 24, whereby said means (530) are further adapted to apply a Forward Error Correction scheme with a low coding rate.

26. A network element (500) according to any one of the previous claims 15 to 25, whereby said means (570) adapted to perform said estimation are further adapted to perform said estimation over a large number of frames.

27. A network element (500) according to any one of the previous claims 15 to 26, whereby said means (530, 540) are further adapted to encrypt and/or decrypt said data on a Physical Layer.

28. A network element (500) according to any one of the previous claims 15 to 27, whereby said network element (500) is one of the following: a mobile terminal, a base station, an access point or a computing device.

29. A telecommunications network (1000) comprising at least two network elements according to claims 15 to 28.

# FIG 1

1000

Attacker

50

A

B

C

10

100

20

200

Central Unit/BSC

Network Infrastructure /other networks

Z

N

10, 20, ... Z=mobile terminal
100, 200, ... N=base station/access point
A, B, C=paths of different between the different devices

# FIG 2

A, B, C = paths of channels between the different devices
10 = mobile terminal
50 = attacker
100 = base station/access point

# FIG 3

channel estimation means — 570

Key Generating means — 550

Central Processing Unit — 560

Enctypting means — 530

Tx means — 510

Decrypting means — 540

Rx means — 520

500

1000

800

C

Central Unit/BSC

600

700

900

C=path of the channel between network elements 500, 600

EP 1 710 968 A1

**European Patent Office**

**EUROPEAN SEARCH REPORT**

Application Number

EP 05 00 7418

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 604 806 A (HASSAN ET AL) 18 February 1997 (1997-02-18) * column 4, line 25 - column 5, line 49 * * column 6, line 66 - column 7, line 25 * * column 11, line 65 - column 12, line 37 * | 1-29 | H04L29/06 H04Q7/32 |
| X | DE 101 00 346 A1 (SIEMENS AG) 11 July 2002 (2002-07-11) * paragraph [0003] - paragraph [0011] * * paragraph [0013] * | 1-29 | |
| X | EP 0 781 063 A (SIEMENS AKTIENGESELLSCHAFT) 25 June 1997 (1997-06-25) * sentence 4, paragraph 55 - sentence 5, paragraph 20 * | 1,15,29 | |

| TECHNICAL FIELDS SEARCHED (Int.Cl.7) |
|---|
| H04L H04Q |

The present search report has been drawn up for all claims

| Place of search | Date of completion of the search | Examiner |
|---|---|---|
| Berlin | 23 August 2005 | Rothlübbers, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 00 7418

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2005

| Patent document cited in search report | | Publication date | Patent family member(s) | | Publication date |
|---|---|---|---|---|---|
| US 5604806 | A | 18-02-1997 | AU | 707271 B2 | 08-07-1999 |
| | | | AU | 4900596 A | 07-08-1996 |
| | | | AU | 702129 B2 | 11-02-1999 |
| | | | AU | 5414896 A | 14-08-1996 |
| | | | BR | 9607076 A | 04-11-1997 |
| | | | CA | 2210195 A1 | 25-07-1996 |
| | | | CA | 2210714 A1 | 01-08-1996 |
| | | | CN | 1179248 A ,C | 15-04-1998 |
| | | | CN | 1179249 A ,C | 15-04-1998 |
| | | | EP | 0804839 A1 | 05-11-1997 |
| | | | EP | 0804840 A2 | 05-11-1997 |
| | | | FI | 973067 A | 19-09-1997 |
| | | | FI | 973069 A | 19-09-1997 |
| | | | JP | 10512727 T | 02-12-1998 |
| | | | JP | 10513317 T | 15-12-1998 |
| | | | NZ | 302850 A | 30-08-1999 |
| | | | RU | 2187897 C2 | 20-08-2002 |
| | | | WO | 9622643 A1 | 25-07-1996 |
| | | | WO | 9623376 A2 | 01-08-1996 |
| | | | US | 5995533 A | 30-11-1999 |
| DE 10100346 | A1 | 11-07-2002 | WO | 02054807 A1 | 11-07-2002 |
| EP 0781063 | A | 25-06-1997 | DE | 19548044 A1 | 26-06-1997 |
| | | | EP | 0781063 A2 | 25-06-1997 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1458163 A

- US 20040161109 A, Trifonov

**Non-patent literature cited in the description**

- An Initial Security Analysis of the IEEE 802.1X Standard. **ARBAUGH et al.** Tech. Rep. CS-TR-4328. 06 February 2002

- A Man-in-the-Middle Attack on UMTS. **MEYER et al.** WiSe'04. 01 October 2004, 90-97